# EUROPEAN PATENT APPLICATION

(11) **EP 2 924 988 A1**
(43) Date of publication of application: **30.09.2015**
(21) Application number: 13869081.3
(22) Date of filing: 19.12.2013
(51) Int. Cl.: H04N 7/15

(54) **METHOD AND APPARATUS FOR SCHEDULING VIDEO CONFERENCE**

(30) Priority: 27.12.2012 CN 201210579027
(71) Applicant: Huawei Technologies Co., Ltd., Longgang District Shenzhen, Guangdong 518129 (CN)
(72) Inventor: XIAO, Min, Shenzhen Guangdong 518129 (CN); LI, Kai, Shenzhen Guangdong 518129 (CN); CHEN, Xianyi, Shenzhen Guangdong 518129 (CN); YANG, Haiyao, Shenzhen Guangdong 518129 (CN)
(74) Representative: Goddar, Heinz J.
(86) International application number: PCT/CN2013/089989
(87) International publication number: WO 2014/101715

(57) **Abstract**

The present invention provides a video conference scheduling method and apparatus and relates to the communications field. In the present invention, a conference reservation reference list can be ultimately obtained by acquiring reservation information of each conference site and QoS description information sent by each conference site and performing statistical analysis on the QoS description information and the reservation information, so that a user can select an optimal reservation scheme from the conference reservation reference list according to a conference site and time that the user wants to reserve, which avoids a problem that a conference cannot be normally held because of a poor network status, realizes effective arrangements for the conference, and improves work efficiency, thereby reducing a waste of conference resources, human resources, and time caused by an unsuccessful conference. The present invention is applied to video conference scheduling.

## Description

This application claims priority to Chinese Patent Application No. 201210579027.1, filed with the Chinese Patent Office on December 27, 2012, and entitled "VIDEO CONFERENCE SCHEDULING METHOD AND APPARATUS", which is incorporated herein by reference in its entirety.

### TECHNICAL FIELD

The present invention relates to the communications field, and in particular, to a video conference scheduling method and apparatus.

### BACKGROUND

Currently, a large video conference includes a great quantity of devices and has a complex structure. Due to lack of fault prediction, a video conference usually cannot normally proceed when a fault suddenly occurs. When a multi-party multi-place video conference is held, due to lack of information about the conference and inadequate preparation for the conference in advance, the video conference cannot normally proceed, thereby resulting in a waste of network and device resources.

In the prior art, when making a reservation for a video conference, a staff member can only reserve a conference site according to configuration information of the conference site, without any other reference information. When a video conference is being held, a network status may be poor, and consequently, the conference cannot normally proceed, thereby resulting in a waste of conference resources, man power, and time, and reducing work efficiency.

### SUMMARY

Embodiments of the present invention provide a video conference scheduling method and apparatus. In the embodiments, reservation situations of a device and a conference site for a video conference can be acquired, and an optimal video conference scheduling scheme can be acquired by analyzing stored historical information of a video conference, so that conference resources are fully utilized, and personnel work efficiency is improved.

To achieve the foregoing objectives, the embodiments of the present invention use the following technical solutions:
according to a first aspect, a video conference scheduling method is provided, and the method includes:
   acquiring reservation situation information of each conference site, and receiving quality of service QoS description information sent by each conference site, where the QoS description information includes a historical network status of each conference site, and the reservation situation information includes a current reservation status of each conference site; and
   performing statistical analysis on the reservation situation information of each conference site and the quality of service QoS description information sent by each conference site, to obtain a conference reservation reference list, where the conference reservation reference list includes information about whether each conference site is reserved in each time period and a network status of each conference site in each time period, so that a user selects a conference site according to the conference reservation reference list.

In a first possible implementation manner, with reference to the first aspect, the scheduling method further includes:
formulating a conference reservation suggestion for the user according to reservation information of the user and the conference reservation reference list, where if the user accepts the conference reservation suggestion, a reservation is successfully made.

In a second possible implementation manner, with reference to the first aspect, the network status includes:
at least one of a packet loss rate, bandwidth, network delay, and jitter.

In a third possible implementation manner, with reference to the first possible implementation manner of the first aspect, the reservation information of the user includes a conference site that the user wants to reserve, reserved time, a quantity of persons involved in communication, and an importance degree of a conference.

In a fourth possible implementation manner, with reference to any one of the first possible implementation manner of the first aspect to the fourth possible implementation manner of the first aspect, the conference reservation suggestion includes at least one of a conference site suggestion, a conference time suggestion, and a video mode suggestion.

In a fifth possible implementation manner, with reference to the first possible implementation manner of the first aspect, the formulating a conference reservation suggestion for the user according to reservation information of the user and the conference reservation reference list specifically includes:
formulating the conference reservation suggestion for the user according to the reservation information, and the information about whether each conference site is reserved in each time period and the network status of each conference site in each time period that are in the conference reservation reference list.

In a sixth possible implementation manner, with reference to any one of the first aspect to the fifth possible implementation manner of the first aspect, when the conference reservation suggestion is formulated for the user according to the reservation information of the user and the conference reservation reference list, reference is made to a conference site maintenance suggestion and a conference site device maintenance suggestion.

In a seventh possible implementation manner, with reference to the sixth possible implementation manner of the first aspect, a method for formulating the conference site maintenance suggestion and the conference site device maintenance suggestion includes:
receiving maintenance information of the conference site, where the maintenance information includes a network utilization rate, a packet loss rate, a device list, a previous inspection time, a device utilization rate, and a device packet loss rate of the conference site; and
formulating the conference site maintenance suggestion according to the network utilization rate, the packet loss rate, the device list, and the previous inspection time of the conference site, and formulating the conference site device maintenance suggestion according to the device utilization rate, the device packet loss rate, and the previous inspection time, so that a maintenance engineer maintains the conference site and a device at the conference site according to the conference site maintenance suggestion and the conference site device maintenance suggestion.

In an eighth possible implementation manner, with reference to the seventh possible implementation manner of the first aspect, the formulating a conference site maintenance suggestion according to the network utilization rate, the packet loss rate, the device list, and the previous inspection time of the conference site includes:
if the network utilization rate of the conference site is less than a first preset utilization rate threshold, suggesting examining whether it is required to reconfigure a quantity of devices at the conference site;
if the packet loss rate of the conference site is greater than a first preset packet loss rate threshold, suggesting enabling a packet loss concealment function, and suggesting troubleshooting a network circuit; and
if a time span between a current time and the previous inspection time is greater than a first preset time span threshold, suggesting monitoring an entire network immediately. In a ninth possible implementation manner, with reference to the seventh possible implementation manner of the first aspect, the formulating a conference site device maintenance suggestion according to the device utilization rate, the device packet loss rate, and the previous inspection time includes:
if a device utilization rate of a device at the conference site is less than a second preset utilization rate threshold, suggesting inspecting the device;
if a packet loss rate of the device at the conference site is greater than a second preset packet loss rate threshold, suggesting enabling a packet loss concealment function, and suggesting troubleshooting a network circuit;
if the packet loss rate of the device at the conference site is greater than a third preset packet loss rate threshold, suggesting troubleshooting the network circuit; and
if a time span between a current time and the previous inspection time of the device is greater than a second preset time span threshold, suggesting monitoring an entire network immediately.

According to a second aspect, a video conference scheduling apparatus is provided, where the apparatus includes:
a data communication module, configured to acquire reservation situation information of each conference site, receive quality of service QoS description information sent by each conference site, where the QoS description information includes a historical network status of each conference site, and the reservation situation information is a current reservation status of each conference site, and send, to a data analysis module, the reservation situation information and the quality of service QoS description information sent by each conference site; and
the data analysis module, configured to receive, from the data communication module, the reservation situation information of each conference site and the quality of service QoS description information sent by each conference site, and perform statistical analysis on the reservation situation information of each conference site and the quality of service QoS description information sent by each conference site, to obtain a conference reservation reference list, where the conference reservation reference list includes information about whether each conference site is reserved in each time period and a network status of each conference site in each time period, so that a user selects a conference site according to the conference reservation reference list.

In a first possible implementation manner, with reference to the second aspect, the video conference scheduling apparatus includes:
a conference reservation module, configured to formulate a conference reservation suggestion for the user according to reservation information of the user and the conference reservation reference list, where if the user accepts the conference reservation suggestion, a reservation is successfully made.

In a second possible implementation manner, with reference to the first possible implementation manner of the second aspect, the network status in each time period includes:
at least one of a packet loss rate, bandwidth, network delay, and jitter.

In a third possible implementation manner, with reference to the first possible implementation manner of the second aspect, the reservation information of the user includes a conference site that the user wants to reserve, reserved time, a quantity of persons involved in communication, and an importance degree of a conference.

In a fourth possible implementation manner, with reference to any one of the first to the third possible implementation manners of the second aspect, the conference reservation suggestion includes at least one of a conference site suggestion, a conference time suggestion, and a video mode suggestion.

In a fifth possible implementation manner, with reference to the first possible implementation manner of the second aspect, the conference reservation module includes:
a reservation suggesting module, configured to formulate the conference reservation suggestion for the user according to the quantity of persons involved in communication and the importance degree of the conference that are in the reservation information, and the information about whether each conference site is reserved in each time period and the network status of each conference site in each time period that are in the conference reservation reference list.

In a sixth possible implementation manner of the second aspect, with reference to the second aspect to the fifth possible implementation manner of the second aspect, the video conference scheduling apparatus further includes that:
when the reservation suggesting module formulates the conference reservation suggestion for the user according to the reservation information of the user and the conference reservation reference list, reference is made to a conference site maintenance suggestion and a conference site device maintenance suggestion.

In a seventh possible implementation manner, with reference to the sixth possible implementation manner of the second aspect,
the data communication module is further configured to receive maintenance information of the conference site, where the maintenance information includes a network utilization rate, a packet loss rate, a device list, a previous inspection time, a device utilization rate, and a device packet loss rate of the conference site; and
the video conference scheduling apparatus further includes: a maintenance suggesting module, configured to formulate a conference site maintenance suggestion according to the network utilization rate, the packet loss rate, the device list, and the previous inspection time of the conference site, and formulate a conference site device maintenance suggestion according to the device utilization rate, the device packet loss rate, and the previous inspection time, so that a maintenance engineer maintains the conference site and a device at the conference site according to the conference site maintenance suggestion and the conference site device maintenance suggestion.

In an eighth possible implementation manner, with reference to the seventh possible implementation manner of the second aspect, the maintenance suggesting module is configured to:
if the network utilization rate of the conference site is less than a first preset utilization rate threshold, suggest examining whether it is required to reconfigure a quantity of devices at the conference site;
if the packet loss rate of the conference site is greater than a first preset packet loss rate threshold, suggesting enabling a packet loss concealment function, and suggesting troubleshooting a network circuit; and
if a time span between a current time and the previous inspection time is greater than a first preset time span threshold, suggesting monitoring an entire network immediately.

In a ninth possible implementation manner, with reference to the seventh possible implementation manner of the second aspect, that the maintenance suggesting module is configured to formulate a conference site device maintenance suggestion according to the device utilization rate, the device packet loss rate, and the previous inspection time of the conference site specifically includes that the maintenance suggesting module is configured to:
if a device utilization rate of a device at the conference site is less than a second preset utilization rate threshold, suggest inspecting the device;
if a packet loss rate of the device at the conference site is greater than a second preset packet loss rate threshold, suggest enabling a packet loss concealment function, and suggest troubleshooting a network circuit;
if the packet loss rate of the device at the conference site is greater than a third preset packet loss rate threshold, suggest troubleshooting the network circuit; and
if a time span between a current time and the previous inspection time of the device is greater than a second preset time span threshold, suggest monitoring an entire network immediately.

According to a third aspect, a video conference scheduling system is provided, where the video conference scheduling system includes:
at least two collection terminals and a video conference scheduling apparatus, where
the at least two collection terminals are separately configured to collect quality of service QoS description information of corresponding conference sites, and send the quality of service QoS description information to the video conference scheduling apparatus, where the quality of service QoS description information includes a historical network status of each conference site; and
the video conference scheduling apparatus is specifically the video conference scheduling apparatus according to any one of the second aspect to the sixth possible implementation manner of the second aspect.

In a first possible implementation manner, with reference to the third aspect, the video conference scheduling system further includes that:
the collection terminals are further configured to collect maintenance information of the corresponding conference sites, and send the maintenance information of the conference sites to the video conference scheduling apparatus, where the maintenance information includes a network utilization rate, a packet loss rate, a device list, a previous inspection time, a device utilization rate, and a device packet loss rate of the conference site; and
the video conference scheduling apparatus is specifically the video conference scheduling apparatus according to any one of the seventh possible implementation manner of the second aspect to the ninth possible implementation manner of the second aspect.

The embodiments of the present invention provide a video conference scheduling method and apparatus. In the embodiments, a conference reservation reference list is ultimately obtained by acquiring reservation situation information of each conference site and receiving quality of service QoS description information sent by each conference site and performing statistical analysis on the QoS description information and the reservation information, so that a user can select an optimal reservation scheme from the conference reservation reference list according to a conference site and time that the user wants to reserve, which avoids a problem that a conference cannot be normally held because of a poor network status, realizes effective arrangements for the conference, and improves work efficiency, thereby reducing a waste of conference resources, human resources, and time caused by an unsuccessful conference.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a video conference scheduling method according to an embodiment of the present invention;
FIG 2 is a schematic diagram of another video conference scheduling method according to an embodiment of the present invention;
FIG. 3 is a schematic structural diagram of a video conference scheduling apparatus according to an embodiment of the present invention;
FIG. 4 is a schematic structural diagram of a video conference scheduling apparatus according to another embodiment of the present invention;
FIG 5 is a schematic structural diagram of a video conference scheduling apparatus according to an embodiment of the present invention;
FIG. 6 is a schematic structural diagram of a video conference scheduling apparatus according to an embodiment of the present invention;
FIG 7 is a schematic structural diagram of a video conference scheduling apparatus according to another embodiment of the present invention;
FIG. 8 is a schematic structural diagram of a video conference scheduling system according to an embodiment of the present invention; and
FIG. 9 is a schematic structural diagram of a video conference scheduling apparatus according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

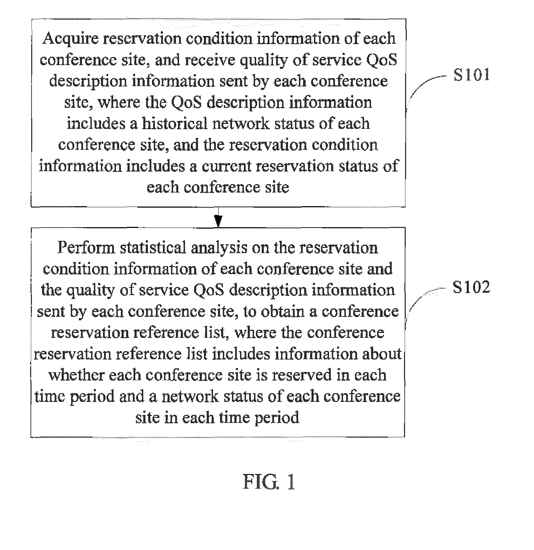

An embodiment of the prevent invention provides a video conference scheduling method. As shown in FIG. 1, the method includes:
S101. Acquire reservation situation information of each conference site, and receive quality of service QoS description information sent by each conference site, where the QoS description information includes a historical network status of each conference site, and the reservation situation information includes a current reservation status of each conference site.

The reservation situation of each conference site is obtained by gathering reservation information input by a person initiating a reservation. The reservation situation information may include information about whether a conference site is reserved, reserved time, a topic for discussion, a quantity of persons involved in communication, an importance degree of a conference, and the like. The historical network status may include a packet loss rate, bandwidth, network delay, and jitter of each conference site in each time period in a previous period of time. A time span of the foregoing period of time may be set by a user, and the packet loss rate, the bandwidth, the network delay or jitter in each time period maybe average values or sampled values in each time period in the foregoing period of time.

S102. Perform statistical analysis on the reservation situation information of each conference site and the quality of service QoS description information sent by each conference site, to obtain a conference reservation reference list, where an example of detailed content of the conference reservation reference list is shown in FIG. 1. The conference reservation reference list includes information about whether each conference site is reserved in each time period and a network status of each conference site in each time period, so that the user selects a conference site according to the conference reservation reference list.

**Table 1**

| Device Type and Location | 2012. XX.XX Day of Week | | | | | |
|---|---|---|---|---|---|---|
| | Reservation Situation and Corresponding QoS Description | | Reservation Situation and Corresponding QoS Description | | Reservation Situation and Corresponding QoS Description | |
| | 9:30-11:30 | QoS description | 15:30-17:30 | QoS description | 19:00-21:00 | QoS description |
| HD/Nanjing conference room 102 | Unreserved | Packet loss rate: 0.5% | Unreserved | Packet loss rate: 0.5% | Unreserved | Packet loss rate: 0% |
| | | Bandwidth: 2Mbit/s | | Bandwidth: 2Mbit/s | | Bandwidth: 4Mbit/s |
| HD/Nanjing conference room 103 | Reserved | Packet loss rate: 10% | Reserved | Packet loss rate: 0.5% | Reserved | Packet loss rate: 0.1% |
| | | Bandwidth: 1Mbit/s | | Bandwidth: 2Mbit/s | | Bandwidth: 3Mbit/s |
| TP/Suzhou conference room 101 | Reserved | Packet loss rate: 0.1% | Unreserved | Packet loss rate: 0.1% | Reserved | Packet loss rate: 0% |
| | | Bandwidth: 4Mbit/s | | Bandwidth: 4Mbit/s | | Bandwidth: 4Mbit/s |
| TP/Suzhou conference room 102 | Unreserved | Packet loss rate: 0.5% | Reserved | Packet loss rate: 0.5% | Unreserved | Packet loss rate: 0.5% |
| | | Bandwidth: 2Mbit/s | | Bandwidth: 2Mbit/s | | Bandwidth: 2Mbit/s |

According to the foregoing table, the user can learn clearly about information about whether a conference site that the user wants to reserve is reserved, reserved time period, a network status in each time period, and the like, and can avoid a conference site that is reserved or has a poor network status, which improves a reservation success rate and ensures an effect of a conference. The table may be provided for the user through a monitor with an interactive function.

This embodiment of the present invention provides a video conference scheduling method. In this embodiment, a conference reservation reference list is ultimately obtained by acquiring reservation information of each conference site and QoS description information sent by each conference site and performing statistical analysis on the QoS description information and the reservation information, so that a user can select an optimal reservation scheme from the conference reservation reference list according to a conference site and time that the user wants to reserve, which avoids a problem that a conference cannot be normally held because of a poor network status, realizes effective arrangements for the conference, and improves work efficiency, thereby reducing a waste of conference resources, human resources, and time caused by an unsuccessful holding of conference.

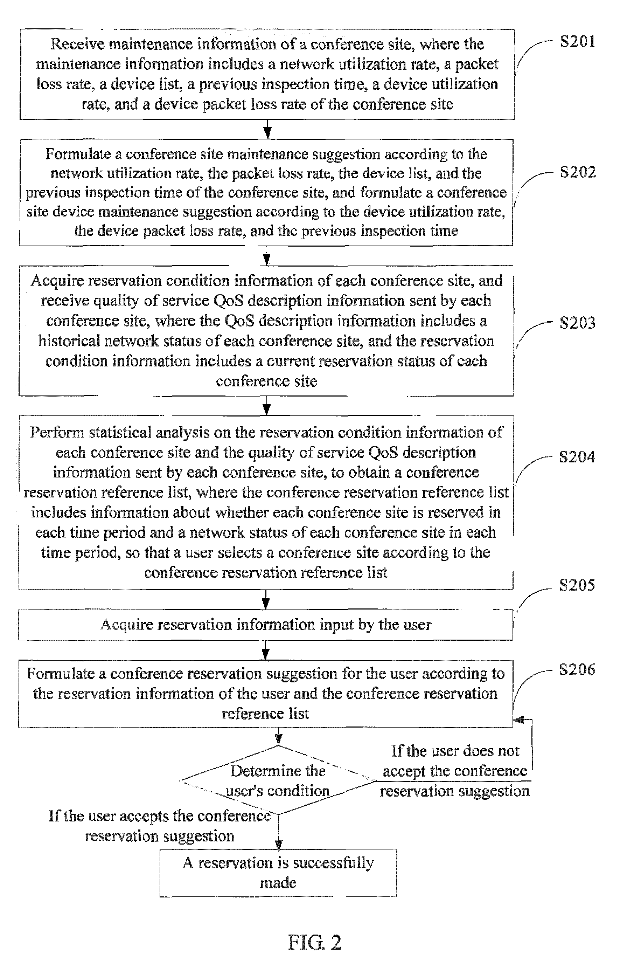

To describe this solution in more detail, an embodiment of the prevent invention provides another video conference scheduling method. As shown in FIG. 2, the method includes:
S201. Receive maintenance information of a conference site, where the maintenance information includes a network utilization rate, a packet loss rate, a device list, a previous inspection time, a device utilization rate, and a device packet loss rate of the conference site. Exemplarily, detailed content of the maintenance information may be as shown in Table 2 and Table 3.

**Table 2**

| Conference Site | Network Utilization Rate | Packet Loss Rate | Device List[Quantity] | Previous Inspection Time |
|---|---|---|---|---|
| Conference site 1 | 10% | 0.1% | HD Endpoint[3] | 2 months ago |
| | | | TP site[1] | |
| Conference | 80% | 5% | HD Endpoint[4] | 24 months ago |
| site 2 | | | TP site[1] | |
| Conference site 3 | 99% | 10% | HD Endpoint[4] | 10 months ago |
| | | | TP site[1] | |
| | | | HD MCU[1] | |

**Table 3**

| Device Name | Device Utilization Rate | Device Packet Loss Rate | Previous Inspection Time | Maintenance Contact | Device Location |
|---|---|---|---|---|---|
| HD MCU1 | 100% | 10% | 10 months ago | Maintenance engineer A | Equipment room 205 |
| TP site 1 | 70% | 0.01% | 2 months ago | Maintenance engineer B | Conference room 101 |
| HD Endpoint 1 | 100% | 0% | 2 months ago | Maintenance engineer C | Conference room 102 |
| HD Endpoint 2 | 100% | 50% | 2 months ago | Maintenance engineer D | Conference room 106 |
| HD Endpoint 3 | 100% | 3% | 2 months ago | Maintenance engineer C | Conference room 107 |
| HD Endpoint 4 | 100% | 0.5% | 2 months ago | Maintenance engineer C | Conference room 108 |

S202. Formulate a conference site maintenance suggestion according to the network utilization rate, the packet loss rate, the device list, and the previous inspection time of the conference site, and formulate a conference site device maintenance suggestion according to the device utilization rate, the device packet loss rate, and the previous inspection time, so that a maintenance engineer maintains the conference site and a device at the conference site according to the conference site maintenance suggestion and the conference site device maintenance suggestion.

Formulating the conference site maintenance suggestion specifically includes:
if the network utilization rate of the conference site is less than a first preset utilization rate threshold, suggesting examining whether it is required to reconfigure a quantity of devices at the conference site;
if the packet loss rate of the conference site is greater than a first preset packet loss rate threshold, suggesting enabling a packet loss concealment function, and suggesting troubleshooting a network circuit; and
if a time span between a current time and the previous inspection time is greater than a first preset time span threshold, suggesting monitoring an entire network immediately. Exemplarily, assuming that the first utilization rate threshold is set to 70%, the first packet loss rate threshold is set to 7%, and the first time span threshold is set to 12 months, as shown in Table 1, a network utilization rate of conference site 1 is less than 70%, and therefore, it is suggested that a quantity of devices at the conference site be configured, for example, adding more devices to improve the network utilization rate. It has been over 12 months since previous inspection of conference site 2, and therefore, it is suggested that an entire network be monitored for conference site 2. A packet loss rate of conference site 3 exceeds 7%, and therefore, it is suggested that a circuit be inspected for conference site 3.

Formulating the conference site device maintenance suggestion includes:
if a device utilization rate of a device at the conference site is less than a second preset utilization rate threshold, suggesting inspecting the device;
if a packet loss rate of the device at the conference site is greater than a second preset packet loss rate threshold, suggesting enabling a packet loss concealment function, and suggesting troubleshooting the network circuit;
if the packet loss rate of the device at the conference site is greater than a third preset packet loss rate threshold, suggesting troubleshooting the network circuit; and
if a time span between a current time and the previous inspection time of the device is greater than a second preset time span threshold, suggesting monitoring an entire network immediately.

For example, assuming that the second utilization rate threshold is set to 60%, the second packet loss rate threshold is set to 0.05%, the third packet loss rate threshold is set to 7%, and that the second time span threshold is set to 6 months, as shown in Table 2, it has been over 6 months since previous inspection of device HD MCU1, and therefore, it is suggested that HD MCU1 be inspected; and a packet loss rate of device HD MCU1 exceeds 7%, and therefore, it is suggested that a network circuit of HD MCU1 be inspected. Packet loss rates of HD Endpoint 3 and HD Endpoint 4 exceed 0.05%, and therefore, it is suggested that a packet loss concealment function be enabled, and that circuits be troubleshoot. A packet loss rate of HD Endpoint 2 far exceeds 7%, and therefore, it is suggested that a network circuit be inspected. Another device functions normally.

S203. Acquire reservation situation information of each conference site, and receive quality of service QoS description information sent by each conference site, where the QoS description information includes a historical network status of each conference site, and the reservation situation information includes a current reservation status of each conference site.

It should be noted that a sequence of step S201 and step S203 is not limited, they may be performed in a specific order, or simultaneously.

S204. Perform statistical analysis on the reservation situation information of each conference site and the quality of service QoS description information sent by each conference site, to obtain a conference reservation reference list, where the conference reservation reference list includes information about whether each conference site is reserved in each time period and a network status of each conference site in each time period, so that a user selects a conference site according to the conference reservation reference list.

In addition, before a conference is reserved according to the conference reservation reference list, the conference site maintenance suggestion and the conference site device maintenance suggestion may be added to the list, so that the user obtains, according to the conference site maintenance suggestion and the conference site device maintenance suggestion, information about conference sites that require circuit inspection and device maintenance, and rules these conference sites out of consideration.

For example, if a packet loss rate of a device at conference room 106 is abnormal, and the user will not select conference room 106 or considers conference room 106 as a last choice according to information in the conference site maintenance suggestion and the conference site device maintenance suggestion. When inspection time of a device at equipment room 205 exceeds an inspection period, and according to a suggestion that a device be inspected, a conference site that uses a circuit and the device at equipment room 205 is not considered or is considered as a last choice.

Preferably, the method may further include:
S205. Acquire reservation information of the user, where the reservation information of the user includes a conference site that the user wants to reserve, reserved time, a quantity of persons involved in communication, an importance degree of a conference, and the like.
S206. Formulate a conference reservation suggestion for the user according to the reservation information of the user and the conference reservation reference list, where if the user accepts the conference reservation suggestion, a reservation is successfully made, and if the user does not accept the conference reservation suggestion, step S206 is executed again until the user accepts the conference reservation suggestion.

The conference reservation suggestion herein includes: at least one of a conference site suggestion, a conference time suggestion, and a video mode suggestion. The conference site suggestion includes a quantity of conference sites that are currently available for selection and a configuration situation of each conference site; the conference time suggestion includes a time period for which a conference site is available for reservation; and the video mode suggestion includes a video format and resolution allowed according to a device configured at and a network situation of each conference site.

A process of formulating a suggestion for a user and interacting with the user may be output by a conference reservation system to a display device or may be notified by a scheduler during communication with the user.

For example, employee A may reserve a conference room 102 in Nanjing according to a conference site reserved for a conference and reserved time, for use between 15:30-17:30 in the afternoon. After employee A submits reservation information by using the conference reservation system, indication information for a successful reservation is displayed on a monitor, to notify employee A that a conference site is successfully reserved.

For example, when employee B selects a conference room 103 in Nanjing for an ordering meeting to be held at 9:30-10:30 in the morning, but the conference room is reserved by employee A in advance to hold a technical discussion meeting among team members. At this time, an importance degree of the meeting to be held by employee B exceeds that of the meeting of employee A, and therefore, after scheduling negotiation with employee A, the conference room in this time period is reserved by employee B, and employee A reserves another conference room instead. A scheduling negotiation process may be completed by the video conference scheduling system, or may be completed by a scheduler of the video conference system.

This embodiment of the present invention provides a video conference scheduling method. In this embodiment, a conference reservation reference list is ultimately obtained by acquiring reservation information of each conference site and QoS description information sent by each conference site and performing statistical analysis on the QoS description information and the reservation information, so that a user can select an optimal reservation scheme from the conference reservation reference list according to a conference site and time that the user wants to reserve and reserved time, which avoids a problem that a conference cannot be normally held because of a poor network status, realizes effective arrangements for the conference, and improves work efficiency, thereby reducing a waste of conference resources, human resources, and time caused by an unsuccessful conference.

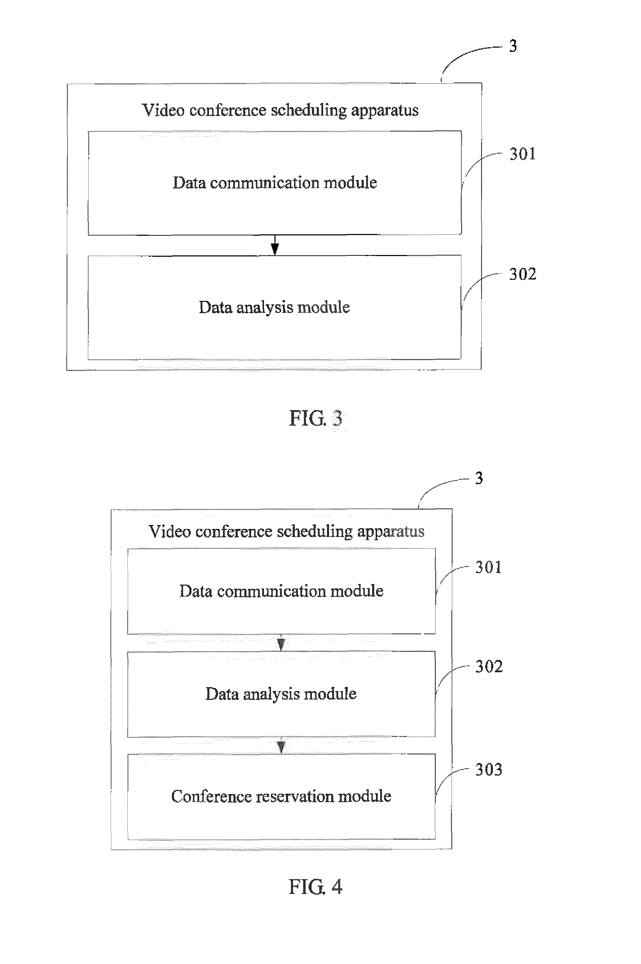

An embodiment of the prevent invention provides a video conference scheduling apparatus 3. As shown in FIG. 3, the apparatus includes: a data communication module 301 and a data analysis module 302.

The data communication module 301 is configured to acquire reservation situation information of each conference site, receive quality of service QoS description information sent by each conference site, where the QoS description information includes a historical network status of each conference site, and the reservation situation information is a current reservation status of each conference site, and send the data analysis module 302 the reservation situation information and the quality of service QoS description information sent by each conference site, where
the historical network status includes a packet loss rate, bandwidth, network delay, and jitter of each conference site in each time period in a previous period of time, where a time span of the period of time may be set by the user, and the packet loss rate, the bandwidth, and the network delay or jitter in each time period may be average values or sampled values in each time period in the foregoing period of time; and
the reservation situation information includes information about whether a conference site is reserved, and a specific reserved time period.

The data analysis module 302 is configured to receive, from the data communication module 301, the reservation situation information of each conference site and the quality of service QoS description information sent by each conference site, and perform statistical analysis on the reservation situation information of each conference site and the quality of service QoS description information sent by each conference site, to obtain a conference reservation reference list, where the conference reservation reference list includes information about whether each conference site is reserved in each time period and a network status of each conference site in each time period, so that a user selects a conference site according to the conference reservation reference list.

Reservation information of the user includes a conference site that the user wants to reserve, reserved time, a quantity of persons involved in communication, and an importance degree of a conference; and the network status includes: at least one of a packet loss rate, bandwidth, network delay, and jitter of each conference site in each time period.

Preferably, as shown in FIG. 4, the video conference scheduling apparatus 3 may further include:
a conference reservation module 303, configured to formulate a conference reservation suggestion for the user according to the reservation information of the user and the conference reservation reference list, where if the user accepts the conference reservation suggestion, a reservation is successfully made. A conference reservation suggestion includes at least one of a conference site suggestion, a conference time suggestion, and a video mode suggestion.

The conference reservation suggestion herein includes: a conference site suggestion, a conference time suggestion, and a video mode suggestion. The conference site suggestion includes a quantity of conference sites that are currently available for selection and a configuration condition of each conference site; the conference time suggestion includes a time period for which a conference site is available for reservation; and the video mode suggestion includes a video format and resolution allowed according to a device configured at and a network condition of each conference site.

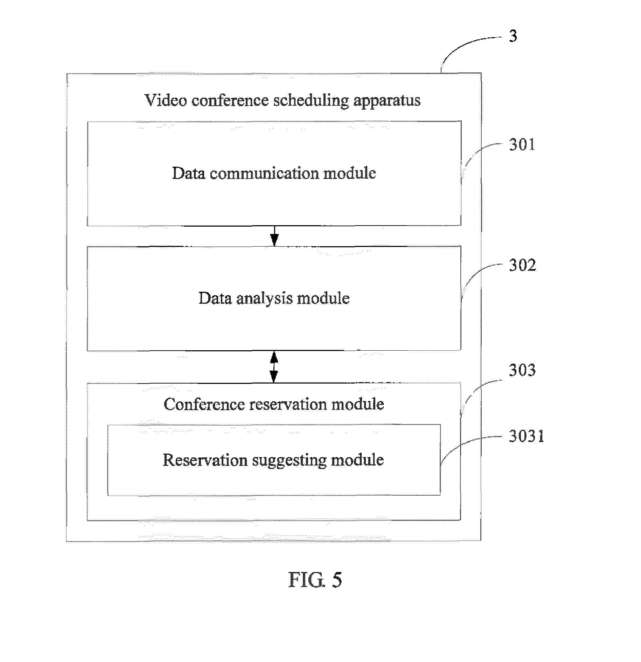

Further, as shown in FIG. 5, the conference reservation module 303 includes:
a reservation suggesting module 3031, configured to formulate a conference reservation suggestion for the user according to the reservation information, and the information about whether each conference site is reserved in each time period and the network status of each conference site in each time period that are in the conference reservation reference list.

Furthermore, when the conference reservation module 303 formulates a conference reservation suggestion for the user according to the reservation information of the user and the conference reservation reference list, reference can be made to a conference site maintenance suggestion and a conference site device maintenance suggestion.

The data communication module 301 is further configured to receive maintenance information of the conference site, where the maintenance information includes a network utilization rate, a packet loss rate, a device list, a previous inspection time, a device utilization rate, and a device packet loss rate of a conference site.

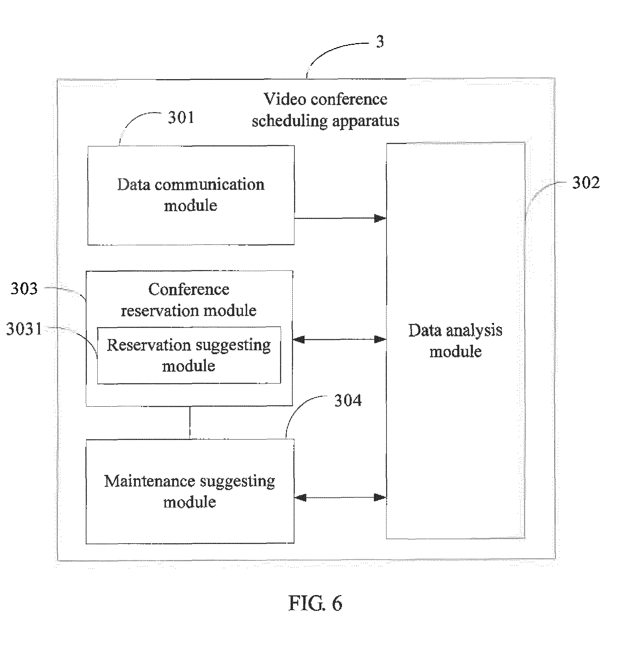

As shown in FIG. 6, the video conference scheduling apparatus 3 may further include:
a maintenance suggesting module 304, configured to formulate a conference site maintenance suggestion according to the network utilization rate, the packet loss rate, the device list, and the previous inspection time of the conference site, and formulate a conference site device maintenance suggestion according to the device utilization rate, the device packet loss rate, and the previous inspection time, so that a maintenance engineer maintains the conference site and a device at the conference site according to the conference site maintenance suggestion and the conference site device maintenance suggestion. Furthermore, that the maintenance suggesting module 304 is specifically configured to formulate a conference site maintenance suggestion according to the network utilization rate, the packet loss rate, the device list specifically includes that the maintenance suggesting module is configured to:
if the network utilization rate of the conference site is less than a first preset utilization rate threshold, suggest examining whether it is required to reconfigure a quantity of devices at the conference site;
if the packet loss rate of the conference site is greater than a first preset packet loss rate threshold, suggest enabling a packet loss concealment function, and suggest troubleshooting a network circuit; and
if a time span between a current time and the previous inspection time is greater than a first preset time span threshold, suggest monitoring an entire network immediately. Furthermore, the maintenance suggesting module 304 is further specifically configured to:
   if a device utilization rate of a device at the conference site is less than a second preset utilization rate threshold, suggest inspecting the device;
   if a packet loss rate of the device at the conference site is greater than a second preset packet loss rate threshold, suggest enabling a packet loss concealment function, and suggest troubleshooting the network circuit;
   if the packet loss rate of the device at the conference site is greater than a third preset packet loss rate threshold, suggest troubleshooting the network circuit; and
   if a time span between a current time and the previous inspection time of the device is greater than a second preset time span threshold, suggest monitoring an entire network immediately.

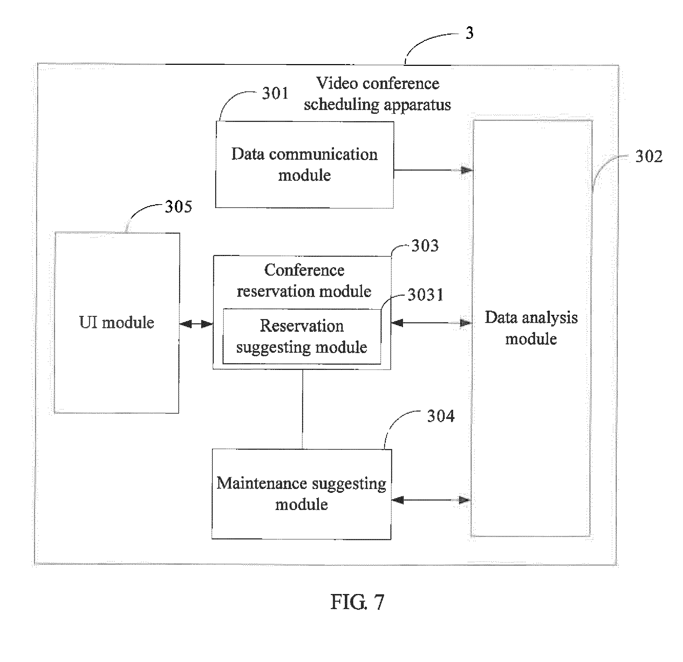

In addition, as shown in FIG. 7, the video conference scheduling apparatus 3 may further include:
a UI module 305, configured to display the conference reservation reference list to the user, so that the user independently selects a conference site, or display, to the user, a conference reservation suggestion formulated for the user, and interact with the user to complete a reservation of a conference, or display a conference site maintenance suggestion and a conference site device maintenance suggestion to the user.

This embodiment of the present invention provides a video conference scheduling apparatus. In this embodiment, a conference reservation reference list is ultimately obtained by acquiring reservation information of each conference site and QoS description information sent by each conference site and performing statistical analysis on the QoS description information and the reservation information, so that a user can select an optimal reservation scheme from the conference reservation reference list according to a conference site and time that the user wants to reserve, which avoids a problem that a conference cannot be normally held because of a poor network status, realizes effective arrangements for the conference, and improves work efficiency, thereby reducing a waste of conference resources, human resources, and time caused by an unsuccessful conference.

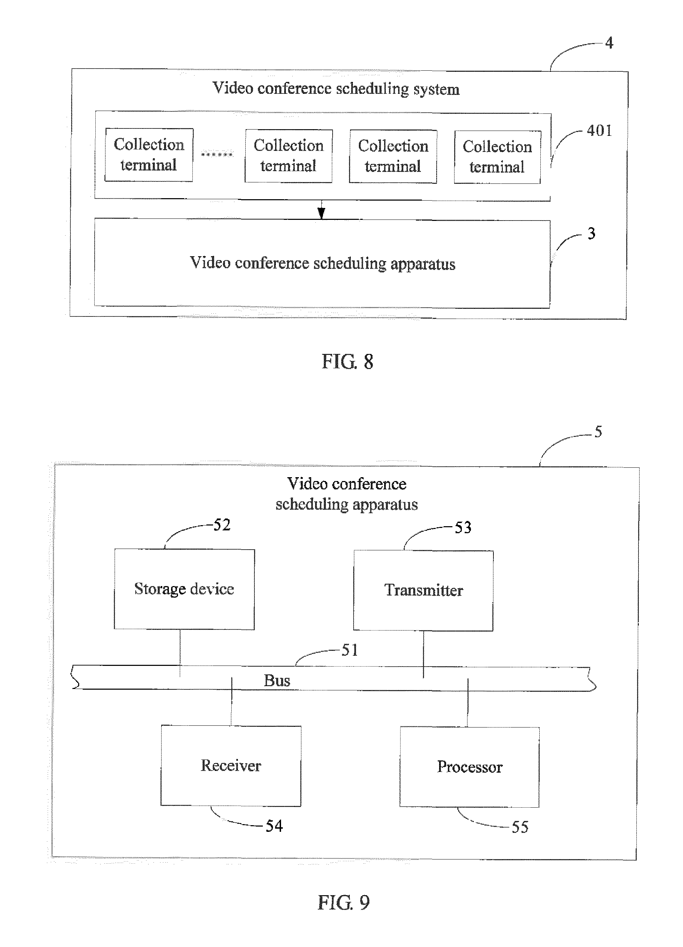

An embodiment of the present invention provides a video conference scheduling system 4. As shown in FIG. 8, the conference scheduling system includes:
at least two collection terminals 401 and a video conference scheduling apparatus 3, where
the at least two collection terminals are separately configured to collect quality of service QoS description information of corresponding conference sites, and send the quality of service QoS description information to the video conference scheduling apparatus, where the quality of service QoS description information includes a historical network status of each conference site.

Further, the collection terminals 401 are further configured to collect maintenance information of the corresponding conference sites, and send the maintenance information of the conference sites to the video conference scheduling apparatus, where the maintenance information includes a network utilization rate, a packet loss rate, a device list, a previous inspection time, a device utilization rate, and a device packet loss rate of the conference site. This embodiment of the present invention provides a video conference scheduling system. In this embodiment, a conference reservation reference list is ultimately obtained by acquiring reservation information of each conference site and QoS description information sent by each conference site and performing statistical analysis on the QoS description information and the reservation information, so that a user can select an optimal reservation scheme from the conference reservation reference list according to a conference site and time that the user wants to reserve. In addition, a maintenance suggestion can be specified for a user with reference to maintenance information of each conference site, so that the user maintains a corresponding conference site according to the maintenance suggestion, where the maintenance suggestion can also provide reference for the user in formulating a reservation scheme, which avoids a problem that a conference cannot be normally held because of a poor network status, realizes effective arrangements for the conference, and improves work efficiency, thereby reducing a waste of conference resources, human resources, and time caused by an unsuccessful conference.

An embodiment of the prevent invention provides a video conference scheduling apparatus 5, including a bus 51, a storage device 52, a transmitter 53, a receiver 54, and a processor 55, where the storage device 52, the transmitter 53, the receiver 54, and the processor 55 are connected by the bus 51, the storage device 52 is configured to store a relevant instruction, and the transmitter 53 is configured to send the relevant instruction. As shown in FIG. 9, the video conference scheduling apparatus 5 further includes:
the receiver 54 is configured to acquire reservation situation information of each conference site and quality of service QoS description information sent by each conference site, where the QoS description information includes a historical network status of each conference site; and
the processor 55 is configured to perform statistical analysis on the reservation situation information of each conference site and the quality of service QoS description information sent by each conference site, to obtain a conference reservation reference list, where the conference reservation reference list includes information about whether each conference site is reserved in each time period and a network status of each conference site in each time period, so that a user selects a conference site according to the conference reservation reference list.

Further, the processor 55 is further configured to formulate a conference reservation suggestion according to reservation information of the user and the conference reservation reference list, if the user accepts the conference reservation suggestion, a reservation is successfully made, and if the user does not accept the conference reservation suggestion, a conference reservation suggestion may be formulated again according to the reservation information of the user and the conference reservation reference list.

The network status includes: at least one of a packet loss rate, bandwidth, network delay, and jitter of each conference site in each time period; the reservation information of the user includes a conference site that the user wants to reserve, and reserved time, and may further include a topic for discussion, a quantity of persons involved in communication, and an importance degree of a conference; and the conference reservation suggestion includes at least one of a conference site suggestion, a conference time suggestion, and a video mode suggestion.

Further, the processor 55 is further configured to formulate a conference reservation suggestion for the user according to the reservation information, and the information about whether each conference site is reserved in each time period and the network status of each conference site in each time period that are in the conference reservation reference list.

If the user accepts the conference reservation suggestion, a reservation is successfully made, and if the user does not accept the conference reservation suggestion, a conference reservation suggestion is formulated again according to the quantity of persons involved in communication and the importance degree of the conference that are in the reservation information, and the information about whether each conference site is reserved in each time period and the network status of each conference site in each time period that are in the conference reservation reference list, until the user accepts the conference reservation suggestion.

When the conference reservation suggestion is formulated for the user according to the reservation information of the user and the conference reservation reference list, reference is made to a conference site maintenance suggestion and a conference site device maintenance suggestion.

Further, the receiver 54 is further configured to receive maintenance information of the conference site, where the maintenance information includes a network utilization rate, a packet loss rate, a device list, a previous inspection time, a device utilization rate, and a device packet loss rate of the conference site; and
the processor 55 may be further configured to formulate a conference site maintenance suggestion according to the network utilization rate, the packet loss rate, the device list, and the previous inspection time of the conference site, and formulate a conference site device maintenance suggestion according to the device utilization rate, the device packet loss rate, and the previous inspection time, so that a maintenance engineer maintains the conference site and a device at the conference site according to the conference site maintenance suggestion and the conference site device maintenance suggestion.

Furthermore, the processor 55 may be further configured to: if the network utilization rate of the conference site is less than a first preset utilization rate threshold, suggest examining whether it is required to reconfigure a quantity of devices at the conference site;
if the packet loss rate of the conference site is greater than a first preset packet loss rate threshold, suggest enabling a packet loss concealment function, and suggesting inspecting a network circuit; and
if a time span between a current time and the previous inspection time is greater than a first preset time span threshold, suggest monitoring an entire network immediately. The processor 55 may be further configured to: if a device utilization rate of a device at the conference site is less than a second preset utilization rate threshold, suggest inspecting the device;
if a packet loss rate of the device at the conference site is greater than a second preset packet loss rate threshold, suggest enabling a packet loss concealment function, and suggest troubleshooting the network circuit;
if the packet loss rate of the device at the conference site is greater than a third preset packet loss rate threshold, suggest troubleshooting the network circuit; and
if a time span between a current time and the previous inspection time of the device is greater than a second preset time span threshold, suggest monitoring an entire network immediately.

In addition, it should be noted that after receiving the quality of service QoS description information sent by each conference site and the reservation situation information or receiving the maintenance information of the conference site, the receiver 54 may send these pieces of information to the storage device 52 first, where the storage device 52 serves as a database for the processor 55 to read information.

This embodiment of the present invention provides a video conference scheduling apparatus. In this embodiment, a conference reservation reference list is ultimately obtained by acquiring reservation information of each conference site and QoS description information sent by each conference site and performing statistical analysis on the QoS description information and the reservation information, so that a user can select an optimal reservation scheme from the conference reservation reference list according to a conference site and time that the user wants to reserve, which avoids a problem that a conference cannot be normally held because of a poor network status, realizes effective arrangements for the conference, and improves work efficiency, thereby reducing a waste of conference resources, human resources, and time caused by an unsuccessful conference.

In the several embodiments provided in the present application, it should be understood that the disclosed method, apparatus, and system may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A video conference scheduling method, wherein the method comprises:
acquiring reservation situation information of each conference site, and receiving quality of service QoS description information sent by each conference site, wherein the QoS description information comprises a historical network status of each conference site, and the reservation situation information comprises a current reservation status of each conference site; and
performing statistical analysis on the reservation situation information of each conference site and the quality of service QoS description information sent by each conference site, to obtain a conference reservation reference list, wherein the conference reservation reference list comprises information about whether each conference site is reserved in each time period and a network status of each conference site in each time period, so that a user selects a conference site according to the conference reservation reference list.

2. The method according to claim 1, wherein the method further comprises:
formulating a conference reservation suggestion for the user according to reservation information of the user and the conference reservation reference list, wherein if the user accepts the conference reservation suggestion, a reservation is successfully made.

3. The method according to claim 1, wherein the network status comprises:
at least one of a packet loss rate, bandwidth, network delay, and jitter.

4. The method according to claim 2, wherein:
the reservation information of the user comprises a conference site that the user wants to reserve, reserved time, a quantity of persons involved in communication, and an importance degree of a conference.

5. The method according to any one of claims 2 to 4, wherein the conference reservation suggestion comprises at least one of a conference site suggestion, a conference time suggestion, and a video mode suggestion.

6. The method according to claim 2, wherein the formulating a conference reservation suggestion for the user according to reservation information of the user and the conference reservation reference list specifically comprises:
formulating the conference reservation suggestion for the user according to the reservation information, and the information about whether each conference site is reserved in each time period and the network status of each conference site in each time period that are in the conference reservation reference list.

7. The method according to any one of claims 1 to 6, wherein:
when the conference reservation suggestion is formulated for the user according to the reservation information of the user and the conference reservation reference list, reference is made to a conference site maintenance suggestion and a conference site device maintenance suggestion.

8. The method according to claim 7, wherein a method for formulating the conference site maintenance suggestion and the conference site device maintenance suggestion comprises:
receiving maintenance information of the conference site, wherein the maintenance information comprises a network utilization rate, a packet loss rate, a device list, a previous inspection time, a device utilization rate, and a device packet loss rate of the conference site; and
formulating the conference site maintenance suggestion according to the network utilization rate, the packet loss rate, the device list, and the previous inspection time of the conference site, and formulating the conference site device maintenance suggestion according to the device utilization rate, the device packet loss rate, and the previous inspection time, so that a maintenance engineer maintains the conference site and a device at the conference site according to the conference site maintenance suggestion and the conference site device maintenance suggestion.

9. The method according to claim 8, wherein the formulating a conference site maintenance suggestion according to the network utilization rate, the packet loss rate, the device list, and the previous inspection time of the conference site comprises:
if the network utilization rate of the conference site is less than a first preset utilization rate threshold, suggesting examining whether it is required to reconfigure a quantity of devices at the conference site;
if the packet loss rate of the conference site is greater than a first preset packet loss rate threshold, suggesting enabling a packet loss concealment function, and suggesting inspecting a network circuit and troubleshooting the network circuit; and
if a time span between a current time and the previous inspection time is greater than a first preset time span threshold, suggesting monitoring an entire network immediately.

10. The method according to claim 8, wherein the formulating a conference site device maintenance suggestion according to the device utilization rate, the device packet loss rate, and the previous inspection time comprises:
if a device utilization rate of a device at the conference site is less than a second preset utilization rate threshold, suggesting inspecting the device;
if a packet loss rate of the device at the conference site is greater than a second preset packet loss rate threshold, suggesting enabling a packet loss concealment function, and suggesting troubleshooting a network circuit;
if the packet loss rate of the device at the conference site is greater than a third preset packet loss rate threshold, suggesting troubleshooting the network circuit; and
if a time span between a current time and the previous inspection time of the device is greater than a second preset time span threshold, suggesting monitoring an entire network immediately.

11. A video conference scheduling apparatus, wherein the apparatus comprises:
a data communication module, configured to acquire reservation situation information of each conference site, receive quality of service QoS description information sent by each conference site, wherein the QoS description information comprises a historical network status of each conference site, and the reservation situation information is a current reservation status of each conference site, and send, to a data analysis module, the reservation situation information and the quality of service QoS description information sent by each conference site; and
the data analysis module, configured to receive, from the data communication module, the reservation situation information of each conference site and the quality of service QoS description information sent by each conference site, and perform statistical analysis on the reservation situation information of each conference site and the quality of service QoS description information sent by each conference site, to obtain a conference reservation reference list, wherein the conference reservation reference list comprises information about whether each conference site is reserved in each time period and a network status of each conference site in each time period, so that a user selects a conference site according to the conference reservation reference list.

12. The video conference scheduling apparatus according to claim 11, wherein the video conference scheduling apparatus further comprises:
a conference reservation module, configured to formulate a conference reservation suggestion for the user according to reservation information of the user and the conference reservation reference list, wherein if the user accepts the conference reservation suggestion, a reservation is successfully made.

13. The video conference scheduling apparatus according to claim 11, wherein the network status comprises:
at least one of a packet loss rate, bandwidth, network delay, and jitter.

14. The video conference scheduling apparatus according to claim 12, wherein
the reservation information of the user comprises a conference site that the user wants to reserve, reserved time, a quantity of persons involved in communication, and an importance degree of a conference.

15. The video conference scheduling apparatus according to any one of claims 12 to 14, wherein
the conference reservation suggestion comprises at least one of a conference site suggestion, a conference time suggestion, and a video mode suggestion.

16. The video conference scheduling apparatus according to claim 12, wherein the conference reservation module comprises:
a reservation suggesting module, configured to formulate a conference reservation suggestion for the user according to the reservation information, and the information about whether each conference site is reserved in each time period and the network status of each conference site in each time period that are in the conference reservation reference list.

17. The video conference scheduling apparatus according to any one of claims 11 to 16, wherein
when the reservation suggesting module formulates the conference reservation suggestion for the user according to the reservation information of the user and the conference reservation reference list, reference is made to a conference site maintenance suggestion and a conference site device maintenance suggestion.

18. The video conference scheduling apparatus according to claim 17, wherein
the data communication module is further configured to receive maintenance information of the conference site, wherein the maintenance information comprises a network utilization rate, a packet loss rate, a device list, a previous inspection time, a device utilization rate, and a device packet loss rate of the conference site; and
the video conference scheduling apparatus further comprises: a maintenance suggesting module, configured to formulate a conference site maintenance suggestion according to the network utilization rate, the packet loss rate, the device list, and the previous inspection time of the conference site, and formulate a conference site device maintenance suggestion according to the device utilization rate, the device packet loss rate, and the previous inspection time, so that a maintenance engineer maintains the conference site and a device at the conference site according to the conference site maintenance suggestion and the conference site device maintenance suggestion.

19. The video conference scheduling apparatus according to claim 18, wherein that the maintenance suggesting module is configured to formulate a conference site maintenance suggestion according to the network utilization rate, the packet loss rate, the device list, and the previous inspection time of the conference site specifically comprises that the maintenance suggesting module is configured to:
if the network utilization rate of the conference site is less than a first preset utilization rate threshold, suggest examining whether it is required to reconfigure a quantity of devices at the conference site;
if the packet loss rate of the conference site is greater than a first preset packet loss rate threshold, suggest enabling a packet loss concealment function, and suggest troubleshooting a network circuit; and
if a time span between a current time and the previous inspection time is greater than a first preset time span threshold, suggest monitoring an entire network immediately.

20. The video conference scheduling apparatus according to claim 18, wherein that the maintenance suggesting module is configured to formulate a conference site device maintenance suggestion according to the device utilization rate, the device packet loss rate, and the previous inspection time of the conference site specifically comprises that the maintenance suggesting module is configured to:
if a device utilization rate of a device at the conference site is less than a second preset utilization rate threshold, suggest inspecting the device;
if a packet loss rate of the device at the conference site is greater than a second preset packet loss rate threshold, suggest enabling a packet loss concealment function, and suggest troubleshooting a network circuit;
if the packet loss rate of the device at the conference site is greater than a third preset packet loss rate threshold, suggest troubleshooting the network circuit; and
if a time span between a current time and the previous inspection time of the device is greater than a second preset time span threshold, suggest monitoring an entire network immediately.

21. A video conference scheduling system, wherein the video conference scheduling system comprises:
at least two collection terminals and a video conference scheduling apparatus, wherein
the at least two collection terminals are separately configured to collect quality of service QoS description information of corresponding conference sites, and send the quality of service QoS description information to the video conference scheduling apparatus, wherein the quality of service QoS description information comprises a historical network status of each conference site; and
the video conference scheduling apparatus is specifically the video conference scheduling apparatus according to any one of claims 11 to 17.

22. The video conference scheduling system according to claim 21, wherein
the collection terminals are further configured to collect maintenance information of the corresponding conference sites, and send the maintenance information of the conference sites to the video conference scheduling apparatus, wherein the maintenance information comprises a network utilization rate, a packet loss rate, a device list, a previous inspection time, a device utilization rate, and a device packet loss rate of the conference site; and
the video conference scheduling apparatus is specifically the video conference scheduling apparatus according to any one of claims 18 to 20.
